# EUROPEAN PATENT SPECIFICATION

(11) **EP 2 543 337 B1**
(45) Date of publication and mention of the grant of the patent: **25.02.2015**
(21) Application number: 10847075.8
(22) Date of filing: 16.04.2010
(51) Int. Cl.: A61C 11/02, A61C 11/00, A61C 13/097, A61C 19/05

(54) **ARTICULATOR**
ARTIKULATOR
ARTICULATEUR

(30) Priority: 05.03.2010 KR 20100019933
(43) Date of publication of application: 09.01.2013
(73) Proprietor: Lee, Chae-Bung, Gyeongsangbuk-do 780-140 (KR); Kim, Se-Hun, Jeonbuk 561-816 (KR)
(72) Inventor: Lee, Chae-Bung, Gyeongsangbuk-do 780-140 (KR); Kim, Se-Hun, Jeonbuk 561-816 (KR)
(74) Representative: Hering, Hartmut
(86) International application number: PCT/KR2010/002401
(87) International publication number: WO 2011/108777

(56) References cited:
- KR-A- 20080 076 600
- KR-A- 20090 085 180
- KR-B1- 100 865 591
- US-A- 4 263 715
- US-A- 4 496 320
- US-A- 4 496 320
- US-A- 5 876 200
- US-A1- 2005 089 815
- US-B1- 6 234 794
- US-B1- 6 450 809
- US-B1- 6 450 809

## Description

### [Technical Field]

The present invention relates to an articulator capable of checking the alignment of teeth by attaching upper and lower jaw models, and more particularly to an articulator in which upper and lower jaw parts have simple movement structures, the occlusal error of upper and lower jaw models can be minimized, and the upper and lower jaw models can be accurately mounted on an occlusal plane.

### [Background Art]

In general, an articulator is an appliance used for manufacturing and diagnosing related to dentures, tooth crown and bridge restoration, and a dental prosthesis by measuring the occlusal states of teeth or a gum. The articulator reproduces the position relations of a jawbone and teeth based on a cranial bone, and the movement of a lower jaw by mechanically emulating the position relations between the jawbone and teeth based on the cranial bone, and the movement of the lower jaw.

Prior art documents such as US 2005/0089815, US 6450809, KR 102 009 0085 180 and US 4263715 shown exemplary articulators.

Actually, in a human body, the movement of upper and lower jaws is achieved by the movement of the lower jaw without the movement of the upper jaw. The structures of most articulators are formed by emulating the movement of the upper and lower jaws of the human body, and a reference axis about which upper and lower jaw fixing parts are folded is formed about a condyle.

In addition, the folding structure of the articulator is classified into an arcon condylar type articulator, in which a condylar guide is provided at the side of the upper jaw, and a non-arcon condylar type articulator, in which the condylar guidance is provided at the side of the lower jaw, according to the condylar elements. Since the non-arcon condylar type articulator has the structure of a non-adjustable articulator, the non-arcon condylar type articulator has been mainly used.

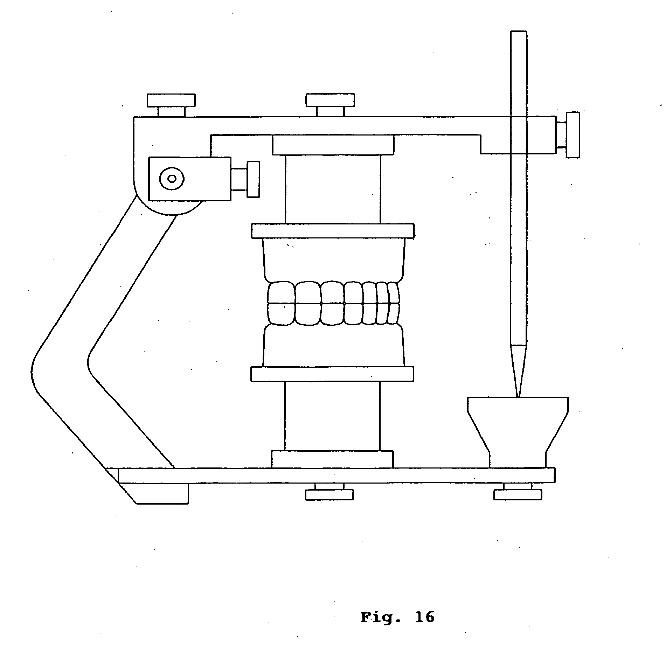

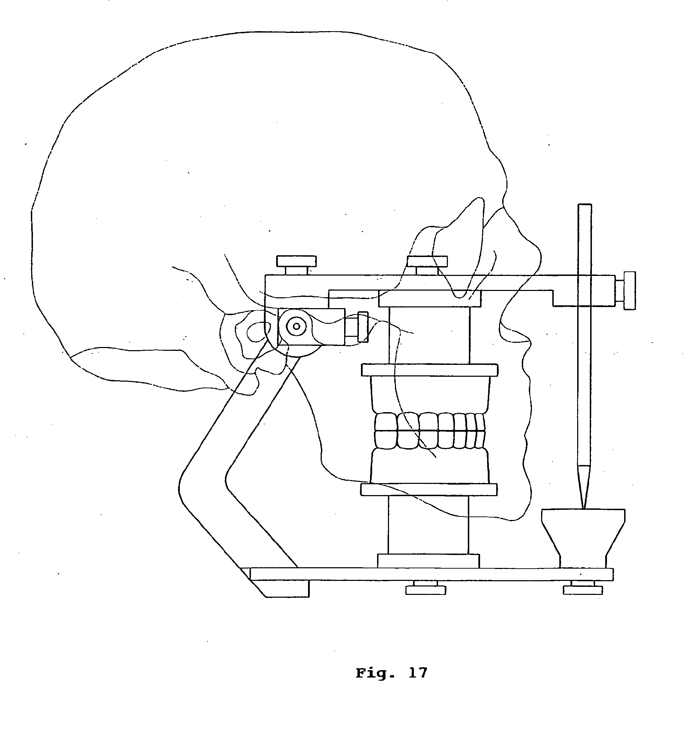

However, the above articulator has the following problems. The articulator is manufactured in a structure reproducing the lower jaw movement of the human body by allowing a position of a reference axis to correspond to a condyle as shown in FIGS. 16 and 17 in order to place upper and lower jaw tooth models most similarly to the structure of upper and lower jaw structure of a human body. However, in terms of a human anatomy, the condyle has a spherical shape, so that the condyle has a great difference from the operating principle of a shaft. In addition, the up-down movement of teeth is achieved through the combination of the position of the condyle and the movement of a specific muscle (masticatory muscle). However, if only the condyle serves as the reference axis as described above, the movement of the specific muscle is excluded, so that errors may occur when the movement of the upper and lower jaws is measured.

Further, in order to adjust an errormargin, various adjusting units are provided in the articulator, so that the errors may be finely adjusted. However, the non-adjustable articulator can measure only simple occlusion in opening and closing, and does not employ additional adjusting units to adjust errors, so that there is no scheme to correct the errors.

Therefore, when the occlusion is measured, the errors are increased, so that the post-process is essentially required in the state that a patient puts on the dental prosthesis.

In addition, the conventional articulator fixes the upper and lower jaw models while checking the position of the occlusal plane by using an auxiliary unit such as a rubber band or a laser in order to place the upper and lower models on the correct occlusal plane. However, a user has great difficulty when mounting the upper and lower jaw models at correct positions by using the auxiliary unit. In addition, the errors may finely occur due to the thickness of the auxiliary unit.

### [Disclosure]

### [Technical Problem]

Thepresent invention has beenmade to solve theaboveproblems occurring in the prior art, and an obj ect of the present invention is to provide an articulator in which an error margin of the articulator can be minimized by setting a central position of physiological occlusion in the movement of the upper and lower jaws as a reference axis, the upper and lower jaw fixing members of the articulator has a simple structure, so that the articulator can be easily manufactured, and an accurate occlusion can be achieved by correctly placing the upper and lower models on the occlusal plane.

### [Technical Solution]

In order to accomplish the above object of the present invention, a reference axis is formed on a line extending from an occlusal plane about which upper and lower jaw fixing members are folded, so that the tangential line of the rotation movement is formed perpendicularly to the occlusal plane. The hinge shaft of the upper jaw fixing member is locked with the non-arcon type locking member of the lower jaw fixing member.

In addition, the jig used to adjust the horizontal state of the lower jawmodel is detached from the non-arcon type locking member of the lower jaw fixing member similarly to the upper jaw fixing member, so that the upper and lower jaw models can be exactly positioned on the occlusal plane.

### [Advantageous Effects]

As described above, according to the present invention, an error margin of the articulator can be minimized by setting a central position of physiological occlusion in the movement of the upper and lower jaws as a reference axis, and the structure of the articulator can be simplified, so that the articulator can be easily manufactured and the manufacturing cost of the articulator can be reduced.

In addition, since the position of the occlusal plane can be set by using the jig, the margin of the occlusal error can be more reduced.

### [Description of Drawings]

FIG. 1 is a perspective view showing one embodiment of the present invention;
FIG. 2 is a side view showing a folding structure of an articulator according to the present invention;
FIG. 3 is a schematic view showing a physiological movement of the articulator according to the present invention;
FIG. 4 is a perspective view showing the disassembled structure of upper and lower jaw fixing members according to the present invention;

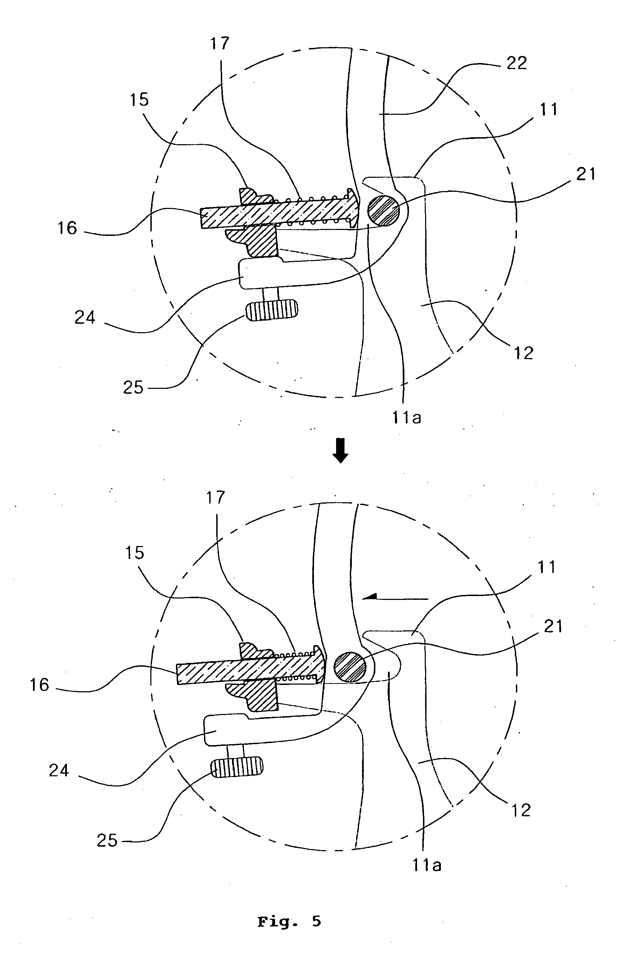

FIG. 5 is a side sectional view showing the disassembled structure of the upper and low jaw fixing members according to the present invention;
FIG. 6 is a side sectional view showing a locking member according to another embodiment of the present invention;
FIG. 7 is a top sectional view showing the twisted state of the hinge shaft and the locking member according to the present invention;
FIG. 8 is a perspective view showing the operation that a jig is assembled to the lower jaw fixing member according to the present invention;
FIG. 9 is a perspective view the assembled state of the lower jaw fixing member and the jig according to the present invention;

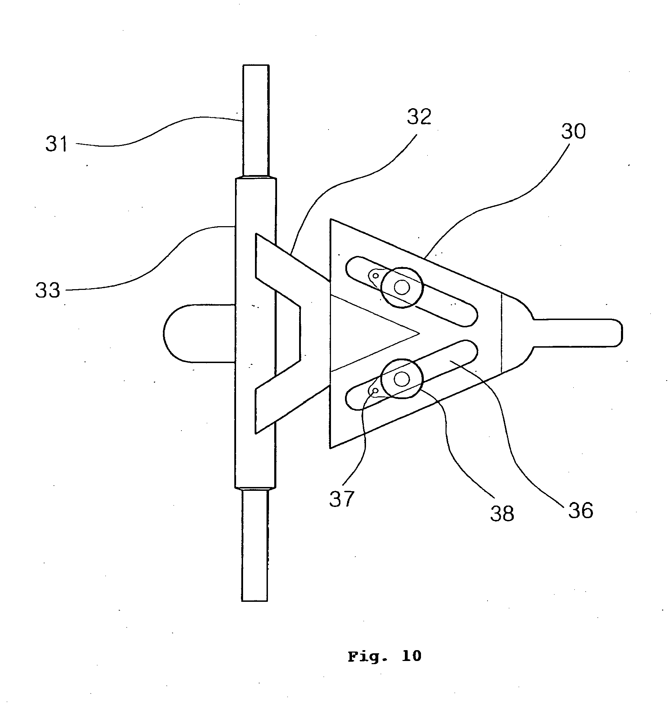

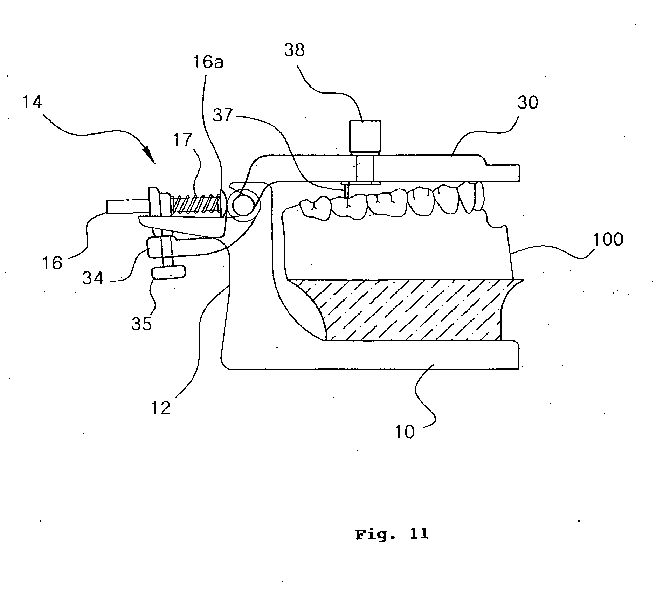

FIGS. 10 and 11 are schematic views showing the use of the jig of FIG. 9;
FIG. 12 is a perspective view showing a jig according to another embodiment of the present invention;

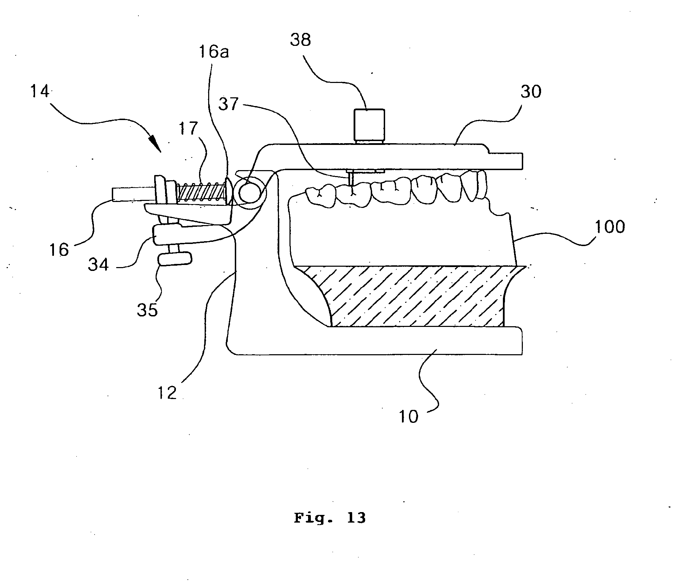

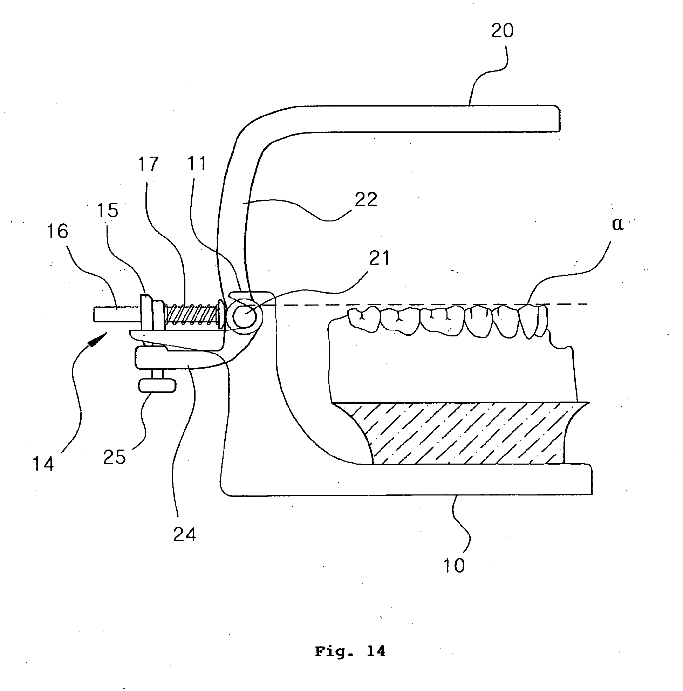

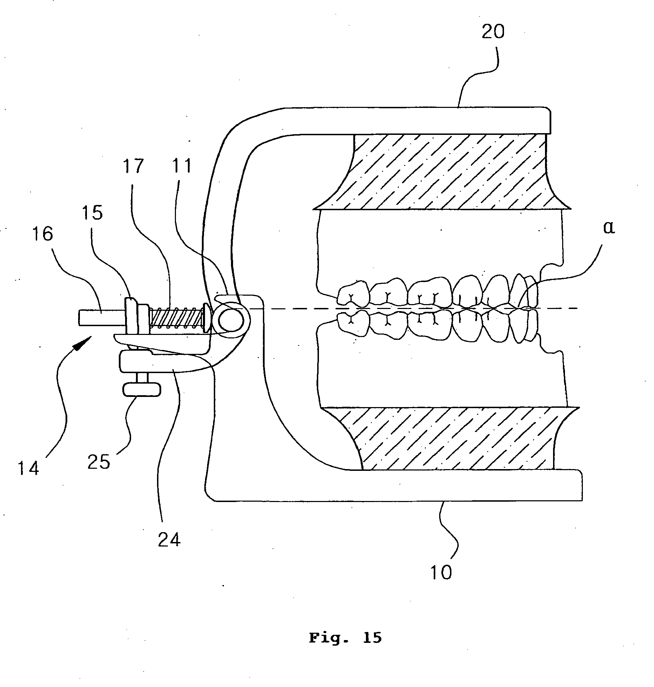

FIGS. 13 to 15 are schematic views showing a procedure of mounting upper and lower jaw models;
FIG. 16 is a side view showing the folding structure of an articulator according to the related art; and
FIG. 17 is a schematic view showing the position of the reference axis of the articulator according to the related art.

### [Best Mode]

According to the present invention, a lower jaw fixing member 10 to mount a lower jaw model 100 and an upper jaw fixing member 20 to mount an upper jaw model 200 are provided, and include a locking member 11 and a hinge shaft 21, respectively, so that the lower jaw fixing member 10 is axially coupled with the upper jaw fixing member 20. Columns 12 and 22 formed at the rear portions of the lower and upper jaw fixing members 10 and 20 have the same height, so that the hinge shaft 21 is provided on the line extending from an occlusal plane α, thereby allowing the lower and upper jaw fixing members 10 and 20 to operate vertically symmetrically to each other about the hinge shaft 21. When the upper and lower jaw models 200 and 100 are vertically folded with each other, a tangential line β of the rotation movement is perpendicular to the occlusal plane α.

### [Mode for Invention]

Hereinafter, exemplary embodiments according to the present invention will be described with accompanying drawings. In the following description, the same elements in accompanying drawings will be assigned with the same reference numbers.

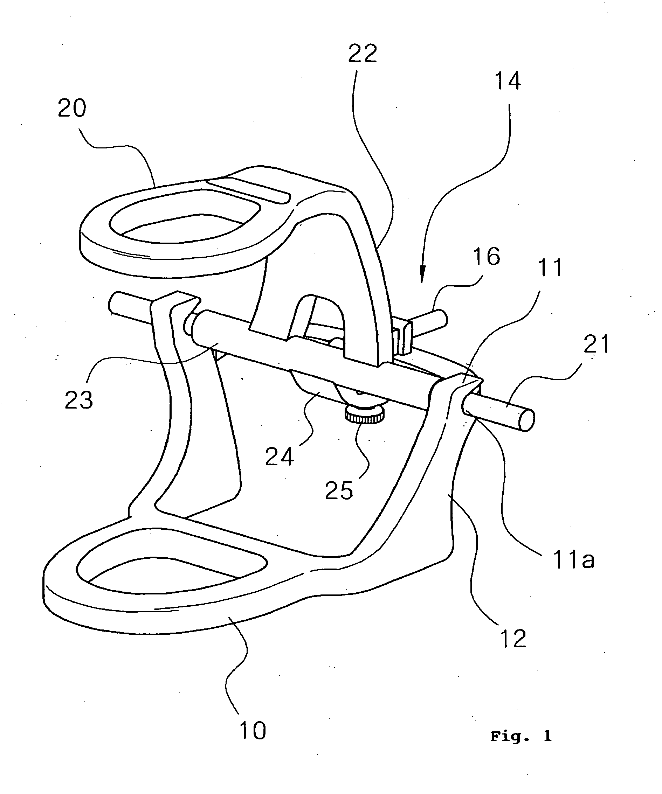

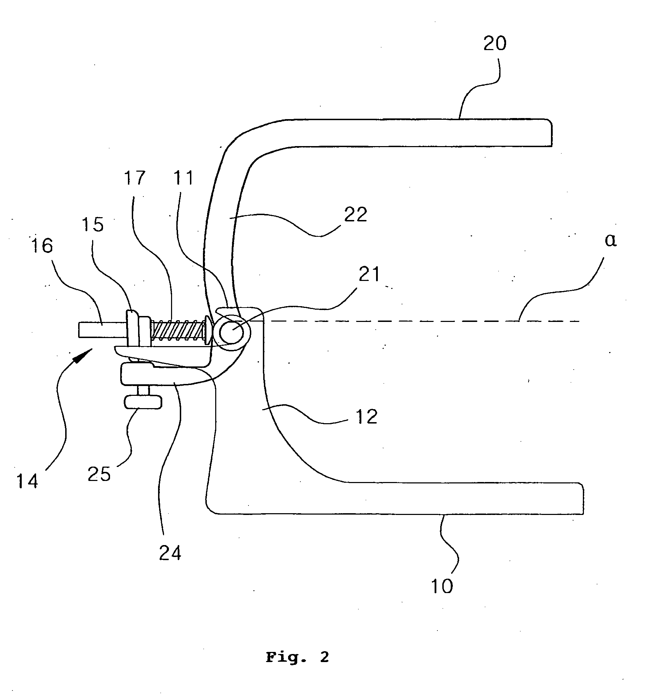

As shown in FIGS. 1 and 2, according to the present invention, the lower and upper jaw fixing members 10 and 20 are provided and vertically folded with each other about the hinge shaft 21 of the upper jaw fixing member 20. The occlusal plane α is set by adjusting the horizontal degree of the upper jaw fixing member 20, and the lower and upper jaw models 100 and 200 are mounted on the occlusal plane α, so that the alignment of teeth can be checked.

In this case, the lower and upper jaw models 100 and 200 are mounted on the lower and upper jaw fixing members 10 and 20, respectively, and fixed to the lower and upper jaw fixing members 10 and 20 by using plaster.

In addition, the locking member 11 and the hinge shaft 21 are formed at the rear portions of the lower and upper jaw fixing members 10 and 20 such that the lower jaw fixing member 10 is axially coupled with the upper jaw fixing member 20. The locking member 11 and the hinge shaft 21 have a coupling position thereof at the central height of the lower and upper jaw fixing members 10 and 20 by allowing the columns 12 and 22 formed at the rear portions of the lower and upper jaw fixing members 10 and 20 to have the same height.

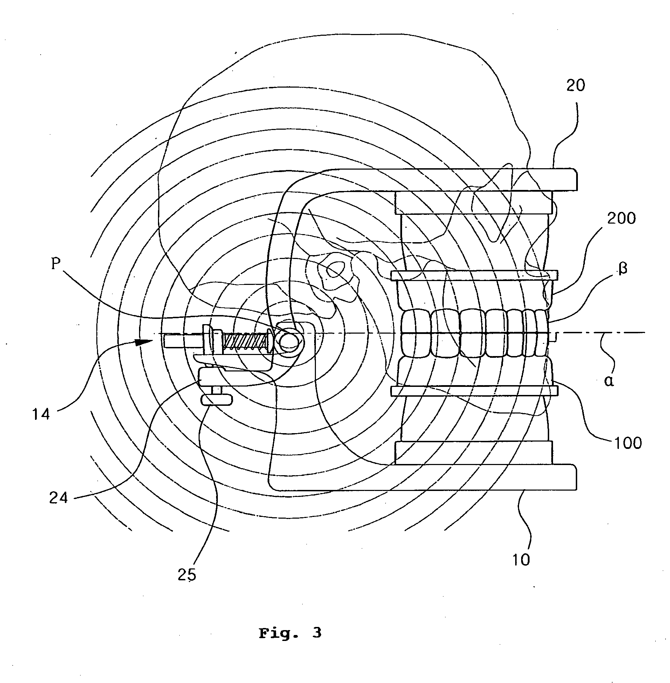

Accordingly, the hinge shaft 11 is positioned on the line extending from the occlusal plane α, so that the lower jaw fixing member 10 and the upper jaw fixing member 20 operate while forming a top and bottom symmetric structure. Accordingly, as shown in FIG. 3, the tangential line β of the rotational movement of the upper and lower jaw models 100 and 200 makes contact with the occlusal plane α perpendicularly to the occlusal plane α, so that the upper and lower jaw models 100 and 200 are vertically folded with each other about a point P serving as the central point of the physiological movement of teeth.

In other words, the upper and lower jaw models 100 and 200 are vertically folded with each other about the reference point P provided at the rear portion so that the upper and lower jaw models 100 and 200 vertically operate, thereby allowing the movement of the lower and upper jaws to be similar to the physiological movement of teeth. Accordingly, the occlusal error margin of the articulator is minimized, so that occlusion can be more accurately achieved.

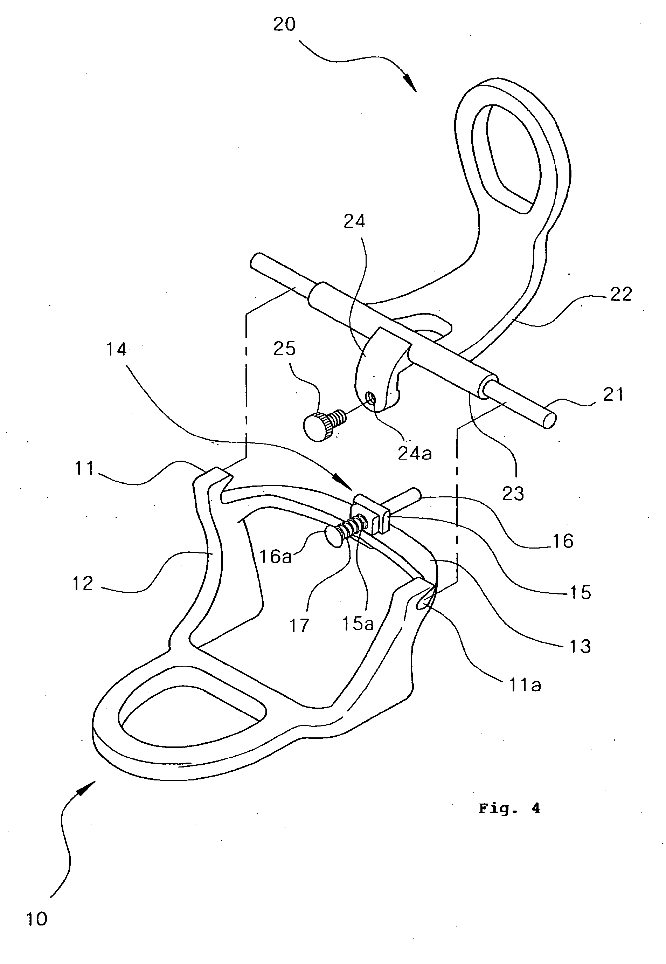

Hereinafter, the folding structure of the lower and upper jaw fixing members 10 and 20 will be described in more detail based on the assembling structure shown in FIG. 4.

The lower jaw fixing member 10 is provided therein with a groove 11a opened backward in a substantially C shape at the upper end of the column 12. The upper jaw fixing member 20 has the shaft 23 formed at a lower end of the column 22 formed at the rear portion, so that the hinge shaft 21 protrudes from both sides of the shaft 23. Accordingly, the hinge shaft 21 is axially coupled with the groove 11a of the lower jaw fixing member 10, so that the upper jaw fixing member 20 is vertically folded with the lower jaw fixing member 10.

In this case, the lower jaw fixing member 10 has a suspension member 13 connecting upper ends of left and right columns 12 to each other, and the suspension member 12 is provided at an upper portion thereof with a support unit 14, thereby preventing the upper jaw fixing member 20 from being out of the coupling state with the low jaw fixing member 10. The support unit 14 has elastic operation structures at front and rear portions thereof, so that the upper jaw fixing member 20 may be detached from the lower jaw fixing member 10 through one touch scheme.

To this end, a protruding wall 15 is formed on the top surface of the suspension member 13, a push bar 16 is inserted into a through hole 15a formed in the protruding wall 15, and a compressive spring is interposed between the head 16a of the push bar 16 and the protruding wall 15, so that the push bar 16 elastically operates forward or backward while elastically supporting the upper jaw fixing member 20.

In this case, in order to detach the upper jaw fixing member 20 from the lower jaw fixing member 10, if the upper jaw fixing member 20 is pushed backward in the state that the lower jaw fixing member 10 is held, the push bar 16 is pushed backward while the hinge shaft 21 of the upper jaw fixing member 20 is out of the locking member 11. Accordingly, the upper jaw fixing member 20 may be drawn upward.

Therefore, the lower and upper models 100 and 200 may be simply mounted or unmounted after the upper jaw fixing member 20 is attached from the lower jaw fixing member 10. Accordingly, the mounting work can be easily achieved and the working time can be shorted.

In this case, if the shaft 23 has a hook-shape protrusion 24 extending backward, the top surface of the hook-shape protrusion 24 is locked with the bottom surface of the suspension member 13, thereby restricting the slop of the upper jaw fixing member 20. In this case, the hook-shape protrusion 24 is formed therein with a screw hole 24a and a bolt 25 is fastened into the screw hole 24a, such that the space between the suspension member 13 and the hook-shape protrusion 24 is adjusted according to the fastening state of the bolt 25, thereby finely setting a angle in which the upper jaw fixing member 20 is inclined.

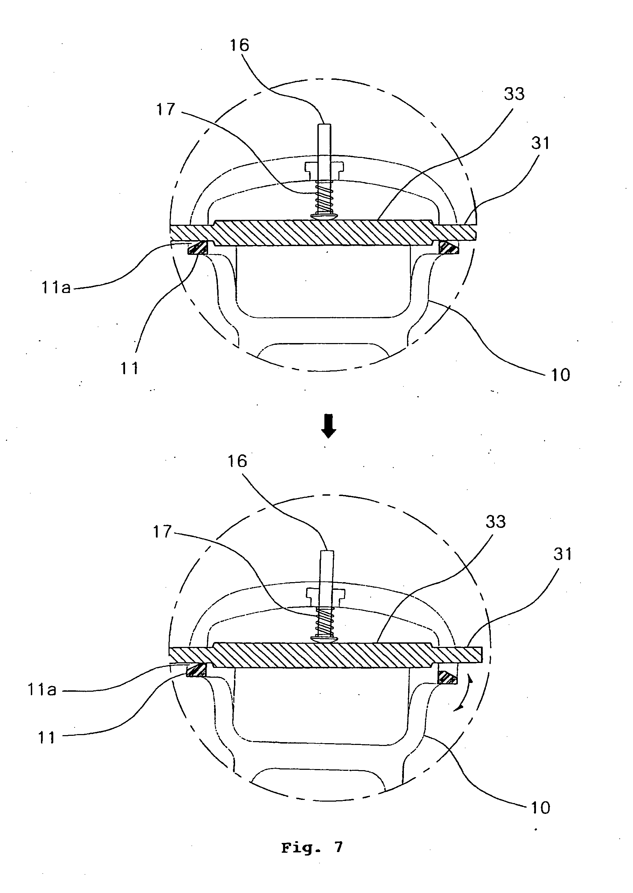

Further, in the articulator, a check bite is interposed between the lower and upper jaw models 100 and 200 to determine the occlusal state between the lower and upper jaw models 100 and 200, and twisted left or right, so that the occlusal state of dentures is determined. The locking member 11 has the substantially C shape, so that the hinge shaft 21 may be detached backward as shown in FIG. 7. Accordingly, in the state that the hinge shaft 21 is pressed by the support unit 14, the lower and upper jaw fixing members 10 and 20 may be twisted left or right.

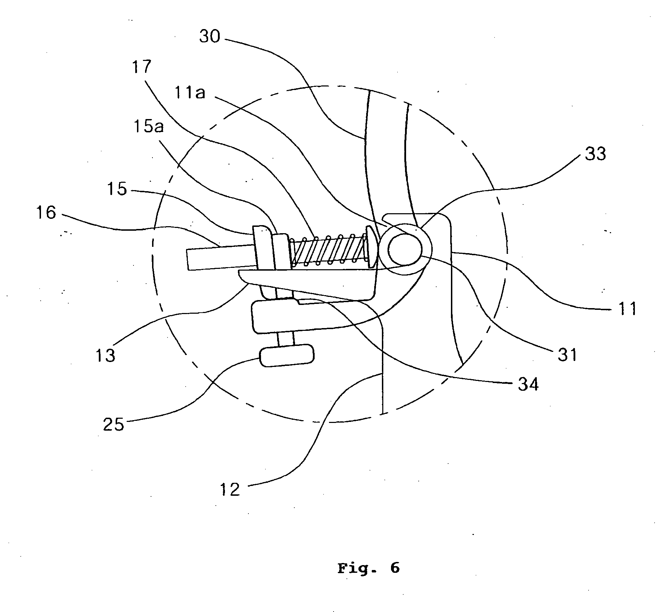

In this case, the locking member 11 has the groove 11a, that is inclined outward, so that the hinge shaft 21 is not locked with the outer step of the groove 11a when the upper jaw fixing member 20 is twisted left or right, so that the upper jaw fixing member 20 may be smoothly twisted. In this case, the groove 11a is inclined backward at an angle of -2° as shown in FIG. 6, such that the occlusal state of the models becomes more similar to the physiological occlusal state of the teeth when the upper jaw fixing member 20 is twisted left or right, so that the occlusal measurement may be more accurately performed.

In this case, a reason that the inclination angle is set an angle of -2° is as follows. When a virtual line connecting the point P, which serves as the central point of the physiological movement, with an interincisal point is employed as a reference line, the inclination angle of a line connecting the point P with an upper end point of a front tooth is -2°. Accordingly, if the top surface of the groove 11a is inclined at an angle of -2° corresponding to the inclination angle of -2° as described above, the lower and upper jaw fixing members are twisted left or right similarly to the physiological movement.

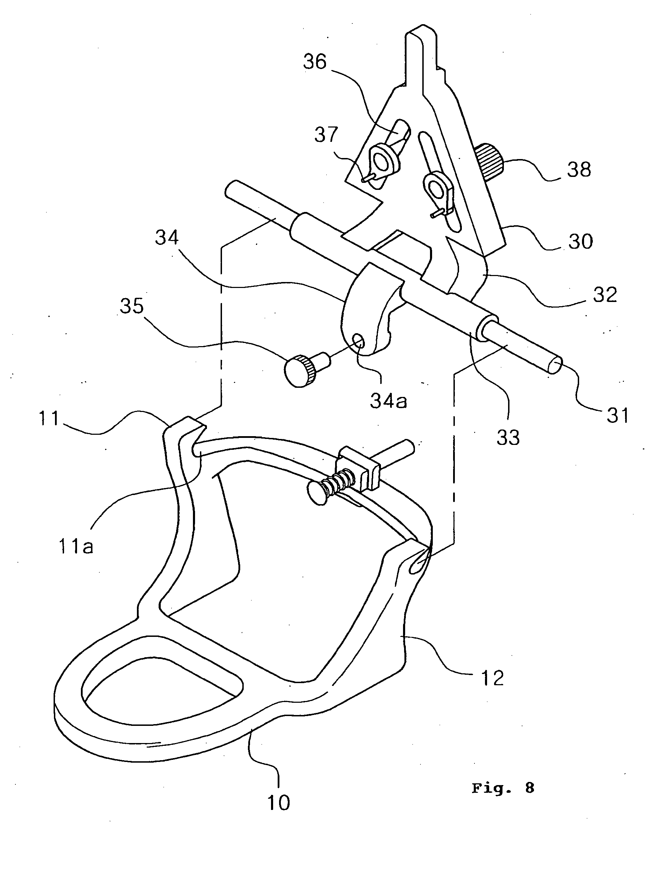

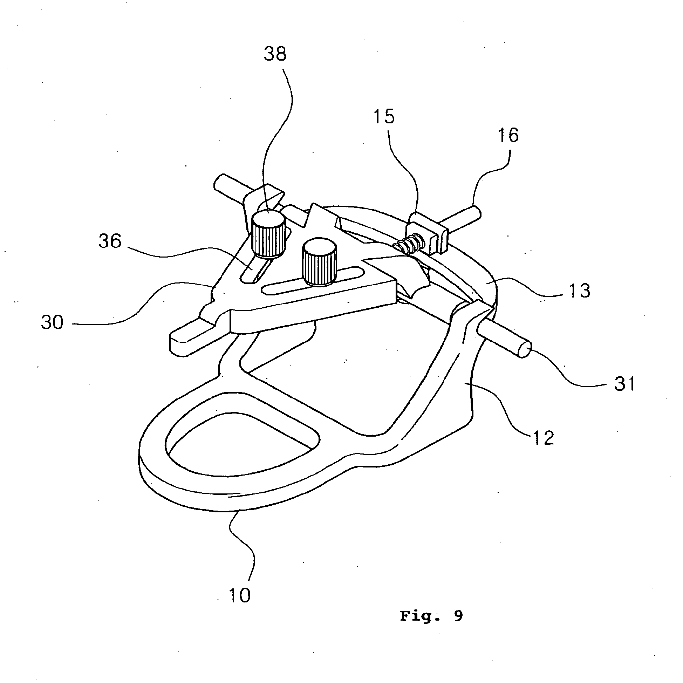

Hereinafter, the working sequence of the articulator will be described below. The sequence of checking the occlusal state is made by folding the upper and lower jaw fixing members 10 and 20 with each other after providing the lower jaw model 100 at the upper portion of the lower jaw fixing member 10, mounting the lower jaw model 100 on the lower jaw fixing member 10 by using a plaster, providing the upper jaw model 200 under the upper jaw fixing member 20, and mounting the upper jaw model on the upper jaw fixing member 20 by using the plaster. In this case, as shown in FIGS. 8 and 9, when the lower jaw model 100 is provided, the lower jaw model 100 may be right positioned on the occlusal plane by us ing an additional jig 30. The detachable structure of the jig 30 may preferably have the same structure as that of the upper jaw fixing member 20.

In other words, the jig 30 has the shaft 33 formed at the lower end of the column 32 provided at the rear portion thereof, the hinge shaft 31 protrudes from both sides of the shaft 33, and the hinge shaft 31 is axially coupled with the groove 11a of the lower jaw fixing member 10, so that the jig 30 is vertically folded. In this case, in the state that the hinge shaft 31 is coupled with the locking member 11, the jig 30 is pressed forward by a support unit provided in the lower jaw fixing member 10 to maintain the axial coupling state.

Due to the above assembly structure, even when the jig 30 is detached, the jig 30 can be simply drawn through one touch scheme after the jig 30 is pulled backward.

In addition, the jig 30 is mounted on the lower jaw fixing member 10 to set the occlusal plane α of the lower jaw model 100, so that the lower jaw model 100 simply adheres to the lower end of the jig 30. Accordingly, the bottom surface of the jig 30 serves as the occlusal plane α, so that the lower jaw model 100 adheres to the lower end of the jig 30 without eye measurement or an additional unit such as a rubber band or a laser. Accordingly, the lower jaw model 100 may be provided at an accurate position of the occlusal plane α.

In addition, the jig 30 has an elongated slot 36 formed therein, and an old tooth position pin 37and a knob 38 are inserted into the slot 36, so that the position of the old tooth position pin 37may be move forward or backward by fastening or releasing the knob 38. Accordingly, the mounting state of the low jaw model 100 can be fixed.

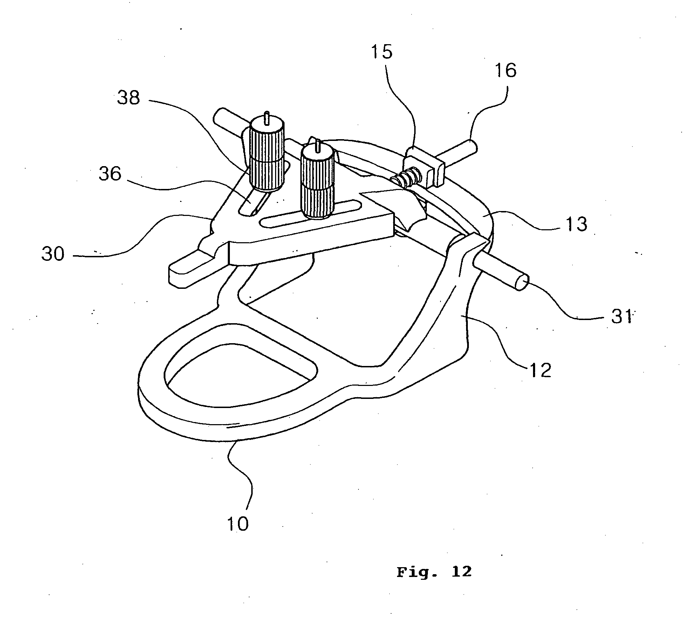

In this case, as shown in FIG. 12, the knob 38 includes upper and lower knobs formed at two layers. The upper knob moves up or down the old tooth position pin 37so that the height of the old tooth position pin 37may be vertically adjusted, and the lower knob adjusts the old tooth position pin 37forward or backward, so that the old tooth position pin 37may be moved to the position suitable for the lower jaw model 100.

In this case, if a rake gear is provided in the slot 36, so that the rake gear is engaged with the lower knob to operate together with the lower knob, the position pin 38 may be finely adjusted.

In addition, if the hook-shape protrusion 24 extending backward is provided on the shaft 33 of the jig 30, the top surface of the hook-shape protrusion 34 is locked with the bottom surface of the suspension member 13, thereby restricting the slop of the jig 30. In this case, if the hook-shape protrusion 34 is provided therein with the screw hole 34a to fasten the bolt 35, the space between the suspension member 13 and the hook-shape protrusion 34 is adjusted according to the fastening state of the bolt 35, thereby finely setting an angle in which the jig 30 is inclined.

## Claims

1. An articulator comprising:
a lower jaw fixing member (10) to mount a lower jaw model (100) thereon; and
an upper jaw fixing member (20) to mount an upper jaw model (200) thereon, wherein the lower and upper jaw fixing members (10, 20) have a locking member (11) and a hinge shaft (21), respectively, such that the lower and upper jaw fixing members (10, 20) are axially coupled with each other, columns (12, 22) formed at rear portions of the lower and upper jaw fixing members (10, 20) have the same length, such that the hinge shaft (21) is positioned on a line extending from an occlusal plane (α), thereby operating the lower and upper fixing members (10, 20) vertically symmetrically to each other about the hinge shaft (21), and a tangential line (β) of a rotation movement is perpendicular to the occlusal plane (α) if the lower jaw model (100) is vertically folded with the upper jaw model (200) about the hinge shaft (21), wherein the locking member (11) is provided therein with a groove (11a) opened backward in a substantially C shape, the hinge shaft (21) protrudes from both sides of a shaft (23) provided at a lower end of the column (22) the upper jaw fixing member (20) is axially coupled with a rear portion of the lower jaw fixing member (10), and a support unit (14) is formed in a suspension member (13) connecting left and right upper ends of the column (12) of the lower jaw fixing member (10) to perform an elastic operation, and presses a rear portion of the shaft (23) while maintaining the axially coupling state of the lower jaw fixing member (10) and the upper jaw fixing member (20),
**characterized in that**
the support unit (14) has a protrusion wall (15) protruding upward from a top surface of the suspension member (13) such that a push bar (16) is inserted into a trough hole (15a) of the protrusion wall (15), and a compressive spring (17) is interposed between a head (16a) of the push bar (16) and the protrusion wall (15) to press the push bar (16) forwarded while the lower jaw fixing member (10) is detached from the upper jaw fixing member (20) and the groove (11a) of the locking member (11) is inclined backward at an angle of -2° such that the upper jaw fixing member (20) more approximately moves to a physiological occlusal state of teeth when the upper jaw fixing member (20) is twisted left or right, to more accurately perform occlusal measurement.

2. The articulator of claim 1, wherein the lower jaw fixing member (10) is detachably coupled with a jig (30) fixedly coupled with the locking member (11) to adjust a horizontal state of the lower jaw model (100), the locking member (11) with the groove (11 a) in a substantially C-shape opens backward such that a hinge shaft (31) of the jig (30) is axially coupled with a rear portion of the locking member (11), and the jig (30) is detached from the lower jaw fixing member (10) through one touch scheme.

3. The articulator of claim 2, wherein the jig (30) is provided therein with an elongated slot (36), and an old tooth position pin (37) is installed in the slot (36), such that a position of the old tooth position pin (37) is manipulated by a knob (38), and a top surface of an old tooth is pressed by fastening the old tooth position pin (37) such that the lower jaw model is fixed.

4. The articulator of claim 3, wherein the knob (38) has a two-stage structure to transfer the old tooth position pin (37) forward or backward while moving up or moving down the old tooth position pin (37), such that the position of the old tooth position pin (37) is set.

5. The articulator of claim 2, wherein the hinge shaft (31) protrudes from left and right sides of a shaft (33) formed at a lower end of a column (32), the shaft (33) has a hook-shape protrusion (34) extending backward, and is supported to a lower end of a suspension member (13), the hook-shape protrusion (34) is formed therein with a screw hole (34a), and a height of the hook-shape protrusion (34) is vertically set by fastening a bolt (35), such that an angle of the jig (30) is adjusted.

## Patentansprüche

1. Artikulator, welcher folgendes aufweist :
Ein unteres Kieferfixierelement (10), um ein unteres Kiefermodell (100) daran anzubringen; und
ein oberes Kieferfixierelement (20), um ein oberes Kiefermodell (200) daran anzubringen, wobei die unteren und oberen Kieferfixierelemente (10, 20) ein Sperrelement (11) und eine Gelenkwelle (21) jeweils derart aufweisen, dass die unteren und oberen Kieferfixierelemente (10, 20) axial miteinander gekoppelt sind, wobei Stützen (12, 22) an den hinteren Abschnitten der unteren und oberen Kieferfixierelemente (10, 20) ausgebildet sind und dieselbe Länge haben, so dass die Gelenkwelle (21) auf einer Linie positioniert ist, die sich von einer Okkusallinie (α) weg erstreckt, wodurch die unteren und oberen Fixierelemente (10, 20) vertikal und symmetrisch zueinander um die Gelenkwelle (21) betätigt werden, und eine Tangentenlinie (β) einer Drehbewegung senkrecht zu der Okklusalebene (α) ist, wenn das untere Kiefermodell (100) um die Gelenkwelle (21) vertikal mit dem oberen Kiefermodell (200) verdreht wird, wobei das Sperrelement (11) mit einer Ausnehmung (11a) versehen ist, welche sich im wesentlichen C-förmig nach hinten öffnet, die Gelenkwelle (21) von beiden Seiten eines Schafts (23) vorsteht, der an einem unteren Ende der Stütze (22) vorgesehen ist, wobei das obere Kieferfixierelement (20) axial mit einem hinteren Abschnitt des unteren Kieferfixierelements (10) gekoppelt ist und eine Trageinheit (14) in einem Einstellteil (13) ausgebildet ist, welches die linken und rechten oberen Enden der Stütze (12) des unteren Kieferfixierelements (1) verbindet, um ein elastisches Verhalten zu verwirklichen und einen hinteren Abschnitt des Schafts (23) mit einer Druckkraft beaufschlagt, während zugleich der axial gekoppelte Zustand von unterem Kieferfixierelemente (10) und dem oberen Kieferfixierelement (20) erhalten bleibt,
**dadurch gekennzeichnet, dass** die Trageinheit (14) eine vorspringende Wand (15) hat, die von einer oberen Fläche des Einstellteilteils (13) derart nach oben vorsteht, dass eine Druckstange (16) in eine Durchgangsöffnung (15a) der vorspringenden Wand (15) eingesetzt ist und eine Druckfeder (17) zwischen einem Kopft (16a) der Druckstange (16) und der vorspringenden Wand (15) angeordent ist, um die Druckstange (16) in Richtung nach vorne zu drücken, während zugleich das untere Kieferfixierelement (10) von dem oberen Kieferfixierelement (20) abgenommen wird, und die Ausnehmung (11a) des Sperrelements (11) in Richtung nach hinten um einen Winkel von -2° derart geneigt ist, dass das obere Kieferfixierelement (20) sich besser zu einem physiologischen Okklusalzustand der Zähne bewegt, wenn das obere Kieferfixierelement (20) nach links und rechts gedreht wird, um eine geanauere Okklusalmessung durchzuführen.

2. Artikulator nach Anspruch 1, bei dem das untere Kieferfixierelement (10) lösbar mit einer Spanneinrichtung (30) verbunden ist, die fest mit dem Sperrelement (11) verbunden ist, um einen horizontalen Zustand des unteren Kiefermodells (100) einzustellen, das Sperrelement (11) mit der Ausnehmung (11a), welche sich im wesentlichen C-förmig nach hinten öffnet, derart ausgelegt ist, dass eine Gelenkwelle (31) der Spanneinrichtung (30) axial mit einem hinteren Abschnitt des Sperrelements gekoppelt ist und die Spanneinrichtung (30) von dem unteren Kieferfixierelement (10) durch eine einmalige Berührung lösbar ist.

3. Artikulator nach Anspruch 2, bei dem die Spanneinrichtung (30) einen länglichen Schlitz (36) aufweist und ein Altzahn-Positionierstift (37) in den Schlitz (36) derart eingesetzt ist, dass eine Position des Altzahn-Positionierstifts (37) mittels eines Knopfes (38) manipulierbar ist und eine obere Fläche eines Altzahns dadurch gedrückt wird, dass der Altzahn-Positionierstift (37) derart festgelegt wird, dass das untere Kiefermodell fixiert ist.

4. Artikulator nach Anspruch 3, bei dem der Knopf (38) eine zweistufige Auslegung hat, um den Altzahn-Positionierstift (37) vor- und zurückzubewegen, während sich zugleich der Altzahn-Positionierstift (37) nach oben und unten derart bewegt, dass die Position des Altzahn-Positionierstifts (37) einstellbar ist.

5. Artikulator nach Anspruch 2, bei dem die Gelenkwelle (31) von einem Schaft (33) rechts und links vorsteht, welcher an einem unteren Ende einer Stütze (32) ausgebildet ist, der Schaft (33) einen hakenförmigen Vorsprung (34) hat, welcher sich nach hinten erstreckt und auf einem unteren Ende eines Einstellelements (13) abgestützt ist, der hakenförmige Vorsprung (34) mit einer Schrauböffnung (34a) versehen ist und eine Höhe des hakenförmigen Vorsprunges (34) durch Anziehen einer Schraube (35) in vertikaler Richtung derart vorgebbar ist, dass ein Winkel der Spanneinrichtung (30) einstellbar ist.

## Revendications

1. Articulateur comprenant :
un élément de fixation de mâchoire inférieure (10) destiné au montage d'un modèle de mâchoire inférieure (100) et
un élément de fixation de mâchoire supérieure (20) destiné au montage d'un modèle de mâchoire supérieure (200), dans lequel les éléments de fixation de mâchoires inférieure et supérieure (10, 20) présentant respectivement un élément de verrouillage (11) et un arbre d'articulation (21) de façon que les éléments de fixation de mâchoires inférieure et supérieure (10, 20) sont couplés axialement l'un à l'autre, des colonnes (12, 22), formées au niveau de parties arrière des éléments de fixation de mâchoires inférieure et supérieure (10, 20) sont de même longueur, de façon que l'arbre d'articulation (21) soit positionné sur une ligne s'étendant depuis un plan occlusal (α) actionnant, ainsi, les éléments de fixation inférieur et supérieur (10, 20) symétriquement dans le sens vertical, l'un par rapport à l'autre, autour de l'arbre d'articulation (21), et une ligne tangentielle (ß) d'un mouvement de rotation est perpendiculaire au plan occlusal (α) si le modèle de mâchoire inférieure (100) est plié verticalement, avec le modèle de mâchoire supérieure (200), autour de l'arbre d'articulation (21), dans lequel l'élément de verrouillage (11) est pourvu d'une rainure (11a) ouverte vers l'arrière, essentiellement en forme de C, l'arbre d'articulation (21) faisant saillie des deux côtés d'un arbre (23) pourvu à une extrémité inférieure de la colonne (22), l'élément de fixation de mâchoire supérieure (20) est couplé axialement à une partie arrière de l'élément de fixation de mâchoire inférieure (10) et une unité de support (14) est formée dans un élément de suspension (13) reliant des extrémités supérieures gauche et droite de la colonne (12) de l'élément de fixation de mâchoire inférieure (10) pour exercer une action élastique, et exerce une pression sur une partie arrière de l'arbre (23) tout en maintenant l'état de couplage axial de l'élément de fixation de mâchoire inférieure (10) et de l'élément de fixation de mâchoire supérieure (20),
**caractérisé en ce que**
l'unité de support (14) présente une paroi en saillie (15) faisant saillie vers le haut par rapport à une surface supérieure de l'élément de suspension (13) de façon qu'une barre de poussée (16) est insérée dans une perforation (15a) de la paroi en saillie (15) et un ressort de compression (17) est interposé entre une tête (16a) de la barre de poussée (16) et la paroi en saillie (15) pour exercer une pression sur la barre de poussée (16) qui est avancée pendant que l'élément de fixation de mâchoire inférieure (10) est détaché de l'élément de fixation de mâchoire supérieure (20) et la rainure (11a) de l'élément de verrouillage (11) est inclinée de -2° vers l'arrière, de façon que l'élément de fixation de mâchoire supérieure (20) se déplace à peu près vers un état occlusal physiologique des dents lorsque l'élément de mâchoire supérieure (20) est tordu à gauche ou à droite pour effectuer la mesure d'occlusion avec davantage de précision.

2. Articulateur suivant la revendication 1, dans lequel l'élément de fixation de mâchoire inférieure (10) est couplé de façon amovible à un gabarit (30) qui est couplé, de façon fixe, à l'élément de verrouillage (11) pour ajuster un état horizontal du modèle de mâchoire inférieure (100), l'élément de verrouillage (11) avec la rainure (11a) essentiellement en forme de C s'ouvre vers l'arrière de façon qu'un arbre d'articulation (31) du gabarit (30) est couplé axialement à une partie arrière de l'élément de verrouillage (11) et le gabarit (30) est détaché de l'élément de fixation de mâchoire inférieure (10) au moyen d'un système à simple touche.

3. Articulateur suivant la revendication 2, dans lequel le gabarit (30) est pourvu d'une fente allongée (36) et d'une goupille de positionnement par rapport à une vieille dent (37) est installée dans la fente (36), de façon qu'une position de la goupille de positionnement par rapport à une vieille dent (37) est manipulée par un bouton (38) et une pression est exercée sur une surface supérieure d'une vieille dent en fixant la goupille de positionnement par rapport à une vieille dent (37) de façon que le modèle de mâchoire inférieure est fixé.

4. Articulateur suivant la revendication 3, dans lequel le bouton (38) présente une structure à deux étages pour transférer la goupille de positionnement par rapport à une vieille dent (37) vers l'avant ou vers l'arrière tout en la déplaçant vers le haut ou vers le bas de façon que la position de la goupille de positionnement par rapport à une vieille dent (37) soit réglée.

5. Articulateur suivant la revendication 2, dans lequel l'arbre d'articulation (31) fait saillie des côtés gauche et droite d'un arbre (33) formé au niveau d'une extrémité inférieure d'une colonne (32), l'arbre (33) présente une saillie en forme de crochet (34) s'étendant vers l'arrière, et est supporté au niveau d'une extrémité inférieure d'un élément de suspension (13), la saillie en forme de crochet (34) est formée avec un trou de vis (33a) et une hauteur de la saillie en forme de crochet (34) est réglée verticalement en fixant un boulon (35) de façon qu'un angle du gabarit (30 soit ajusté.
